Europäisches Patentamt

European Patent Office

Office européen des brevets

(11) Publication number: **0 098 119**
**B1**

# EUROPEAN PATENT SPECIFICATION

(45) Date of publication of patent specification: **11.06.86**

(51) Int. Cl.⁴: **B 28 B 21/52, B 28 B 21/78**

(21) Application number: **83303653.6**

(22) Date of filing: **24.06.83**

(54) A method for producing a thin-walled ceramic tube.

(30) Priority: **29.06.82 JP 110737/82**

(43) Date of publication of application:
**11.01.84 Bulletin 84/02**

(45) Publication of the grant of the patent:
**11.06.86 Bulletin 86/24**

(84) Designated Contracting States:
**DE GB NL**

(56) References cited:
**DE-B-2 733 009**
**US-A-2 598 913**

(73) Proprietor: **NGK INSULATORS, LTD.**
**2-56, Suda-cho, Mizuho-ku**
**Nagoya-shi, Aichi 467 (JP)**

(72) Inventor: **Kobayashi, Kazuo**
**87 Takamine-Cho Showa-Ku**
**Nagoya City (JP)**
Inventor: **Furuta, Mamoru**
**20-10 Hironaga Shinden-Cho**
**Toyoake City (JP)**
Inventor: **Maeno, Yoshio**
**15 Takeda-Cho 2-Chome Mizuho-Ku**
**Nagoya City (JP)**

(74) Representative: **Paget, Hugh Charles Edward
et al
MEWBURN ELLIS & CO. 2/3 Cursitor Street
London EC4A 1BQ (GB)**

Courier Press, Leamington Spa, England.

## Description

The present invention relates to a method for producing a ceramic tube, especially a thin-walled ceramic tube.

The methods of forming ceramic articles are generally classified into pressing, casting and extruding. For a particular article, the best one of these methods is selected depending upon the shape of the article and the properties required of the article.

To form tube-shaped articles, extrusion is mainly used but articles having a thin wall and a high dimension precision are formed by isostatic pressing, which is a kind of pressing, and then the thickness of the shaped article is reduced by mechanical working and dimensional finishing is conducted.

A typical example of an article in which thin wall thickness and high dimensional precision are required, is a translucent alumina tube for a high pressure sodium lamp which has recently become interesting as a light source. This translucent alumina tube is used as the envelope of the lamp, so that light transmission is important, and, to this end, it is required that the wall of the tube is thin. Furthermore, in order to maintain gas-tightness of the seals between metal electrodes and the tube and to maintain uniformity of the lamp properties (lamp operating voltage, lamp output, stability of color tone), high dimensional precision is required.

For example, as the dimension specification of an envelope for a high pressure sodium lamp of 400 W, the following requirements are set:—

| | |
|---|---|
| Outer diameter | $\phi 9.5 \pm 0.1$ mm |
| Length | $113 \pm 1$ mm |
| Wall thickness | $0.85 \pm 0.1$ mm |
| Straightness | less than 0.05 mm per 100 mm |

When a general process of extrusion is used for a tube-shaped article for which such a dimension specification is necessary, the shaped body tends to suffer plastic deformation immediately after formation. Also strain is present in the axial direction of the tube and it has proved difficult to obtain shaped articles meeting the dimension specification requirements for straightness and roundness. Consequently, a translucent alumina tube has been produced as follows. A tube body having a somewhat larger thickness than the final dimensional requirement is formed by isostatic pressing, the thus formed body is subjected to working by abrading the outer surface to finish it to the desired thickness and outer diameter, and then the shaped body is fired. But in this method machining is needed after forming the body, so that the number of working steps is large. Furthermore, the reuse of the raw material powder abraded by the working of the outer surface is difficult because of admixture of impurities, so that expensive alumina powder of high purity is wastefully lost. Therefore this process is uneconomic. Furthermore, in the pressing method, the shaped bodies are individually formed in a high pressure press, so that productivity is poor, and the rubber mold needed for the shaping and the components (valves) of the isostatic press machine to which a high pressure is subjected, are rapidly consumed, for which further reasons this process has been uneconomic.

The present invention seeks to obviate or reduce the above described drawbacks and thus to provide a method for economically producing a thin-walled ceramic tube by extrusion, although this has hitherto been considered difficult.

The present invention lies in a method for producing a ceramic tube in which a plastic body suitable for extrusion is prepared, the body is extruded into a tube and the extruded tube is fired, characterized in that the body consists essentially of ceramic raw material, a water-soluble thermosetting organic substance which is thermally decomposed at the firing temperature and water, and in that hardening of the extruded tube is performed by heating immediately after the extrusion. The heating immediately after extruding is to prevent plastic deformation.

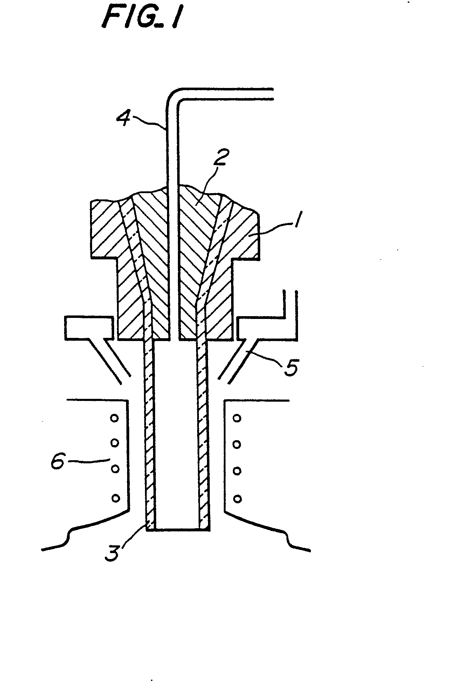

Embodiments of the invention will now be described in detail by way of example, with reference to the accompanying drawing, in which Fig. 1 is a diagrammatic explanatory sectional view of one apparatus for carrying out the method of the present invention.

In one example of a method for producing a translucent alumina ceramic tube in accordance with the present invention, alumina fine powder is thoroughly mixed with a sintering aid, a hydrophilic organic substance which is thermosetting and decomposed or volatilized by pre-firing, and 12—25% by weight of water. The selection of the organic substance is important for the present invention and it is necessary that the organic substance is water soluble and is cured (gelated) by heating and thermally decomposed and that no residue remains after firing of the ceramics. Various organic substances having these properties can be used and we do not wish to limit the choice of the organic substance. We have found that suitable commercially available ones are the methyl cellulose series. An amount of the organic substance added is preferred to be 2—6% by weight, but is influenced by the property of alumina raw material powder. The reason why water and a hydrophilic organic substance are added to the ceramic raw material is that these substances are inexpensive and have a high affinity to the ceramic raw material.

The mixture is treated in a vacuum kneader to remove bubbles in the raw batch material and to form a cylindrical stiff plastic body having a suitable size for extruding. The cylindrical body is extruded into a thin-walled tube using a pusher type or auger type of extruder. The extruded tube is immediately exposed to heated ambient air, so as rapidly to thermoset the organic substance, whereby the whole of the extruded tube is hardened to prevent deformations such as squatting, bowing and the like, and to remove the water. Suitable means to achieve this heating depends upon the type of the extruder, but it is commercially preferable to pass the extruded tube continuously through a heating furnace arranged near the extruding dies 1 and 2 as shown in Fig. 1. In this case, the ambient temperature is preferred to be in the range 300 to 800°C. This is because at a temperature lower than 300°C, the extruded raw tube 3 is liable to be plastically deformed due to its own weight before thermosetting of the organic substance proceeds. When the atmosphere temperature is higher than 800°C, thermosetting of the organic substance is promoted but water in the extruded raw tube may evaporate too rapidly owing to the sudden heating and bubbles tend to be left in the article produced; also part of the organic substance is carbonized and it is difficult to remove such carbonized substance in the subsequent firing.

In order to prevent deformation due to shrinkage towards the inner diameter side of the extruded tube and to remove water vapor generated owing to the heating of the extruded tube, it is very effective to provide an air supply passage 4 in an inner die 2 by which the inner side of the extruded tube is formed and to introduce air at a pressure in the range 20—98 kPa (0.2—1.0 kg/cm$^2$) into the inside of the raw tube through the passage 4. This choice of range for the introduced air pressure is for the following reason. When the pressure is lower than 20 kPa (0.2 kg/cm$^2$), the removal of water vapor may be insufficient and over-saturated water vapor forms water drops on the inner wall of the extruded tube. This water softens and deforms the tube or roughens the inner surface of the tube, leading to deterioration of the light transmission of final product. When the pressure is higher than 98 kPa (1.0 kg/cm$^2$), the extruded tube may be deformed or ruptured.

The tube thus formed has sufficient strength to maintain its shape conforming to the extruding die and not to suffer deformation on handling. The tube is then cut to appropriate lengths and gradually heated in a heating furnace at 800 to 1,200°C to remove the remaining water and the organic substance. Then the tube is heated up to 1,700 to 1,900°C in a hydrogen furnace, vacuum furnace or the like to fire it into a translucent ceramic.

By the above described extrusion process, a thin-walled translucent alumina ceramic tube having a high dimensional precision can be obtained.

The following examples are given for the purpose of illustration of this invention and are not intended as limitations thereof.

Example 1

| | |
|---|---|
| Alumina fine powder having a high purity (99.99%) | 3,000 g |
| Magnesium oxide | 3 g |
| Methyl cellulose | 90 g |
| Polyethylene oxide | 30 g |
| Water | 600 g |

These materials were charged into a kneader and stirred for about 30 minutes to achieve thorough mixing. Then the mixture was kneaded by means of an auger type vacuum kneader to prepare a cylindrical stiff plastic body having an outer diameter of 50 mm and a length of 250 mm. This cylindrical body was extruded through a die provided at the top of a pusher type of extruder at a rate of 15 mm/sec to form an extruded tube having an outer diameter of 12.35 mm and an inner diameter of 10.14 mm. The extruded tube was immediately passed through an electric furnace provided just below the extruding die to thermoset the extruded tube, as shown in Fig. 1.

This process was carried out under various conditions, to determine firstly the influence of the thermosetting conditions on the extruded tubes by varying the temperature of the electrical furnace 6 from 200°C to 1,000°C at constant air pressure. Secondly the effect of air pressure on the hardening of extruded tubes was determined by supplying air at various pressures in the range 0 to 118 kPa (1.2 kg/cm$^2$) via the air supply passage 4 provided in the inner die 2 (see Fig. 1). An air-blowing pipe 5 was provided at the outer periphery of the outer die 1 at the exit from the extruder, and the temperature of the electric furnace 6 adjacent to the extruding dies was set at 600°C.

The hardened tube produced in each case was cut to a length of about 150 mm and dried at 150°C for 12 hours and then heated in an electric furnace to 900°C to remove the organic substances. The tube thus treated was fired at 1,850°C for about 6 hours by passing it through a transverse pusher type hydrogen atmosphere furnace to produce a translucent tube of (9.5—8.0)φ×115 l (mm). The properties of the articles produced are shown in Table 1 and Table 2.

TABLE 1

| Test No. | Thermosetting temperature | Properties of the obtained tube | | |
|---|---|---|---|---|
| | | Roundness* | Bow | Light transmission |
| 1 | 200°C | 0.2 | 1.0 | 92% |
| 2 | 300°C | 0.08 | 0.5 | 94% |
| 3 | 400°C | 0.08 | 0.4 | 93% |
| 4 | 600°C | 0.06 | 0.3 | 95% |
| 5 | 800°C | 0.06 | 0.3 | 90% |
| 6 | 1,000°C | 0.06 | 0.3 | 74% |

\* Max-Min of the outer diameter

TABLE 2

| Test No. | Air pressure | | Roundness | Remarks |
|---|---|---|---|---|
| | Kg/cm² | (kPa) | | |
| 1 | 0 | (0) | 0.3 | Inner surface: rough |
| 2 | 0.2 | (20) | 0.08 | |
| 3 | 0.4 | (39) | 0.08 | |
| 4 | 0.6 | (59) | 0.06 | |
| 5 | 0.8 | (78) | 0.06 | |
| 6 | 1.0 | (98) | 0.06 | |
| 7 | 1.2 | (118) | 0.1 | The tube was ruptured |

As can be seen from these tables, when the thermosetting temperature is 200°C, thermosetting of the organic substance was in this process insufficient and deformation occurs in the subsequent treatment; thus the tube becomes oval and the bow is also large. Whereas at temperature between 300°C and 800°C, both roundness and bow are within the dimensional precision range required for satisfactory practical use and the light transmission is excellent.

When the thermosetting temperature is 1,000°C, the dimensional precision can be achieved but blackening of the tube, which is presumably due to the residual carbonized organic substance, occurs and the light transmission is low.

The results also confirm that the air pressure introduced into the extruded tube can provide the excellent results in a range of 20—98 kPa (0.2—1.0 kg/cm²).

Example 2

| Alumina powder having purity of 99% | 5,000 g |
|---|---|
| SiO₂ powder | 100 g |
| MgO powder | 25 g |
| Methyl cellulose | 150 g |
| Water | 1,500 g |

In the same manner as described in Example 1, these materials were introduced into a kneader and kneaded for 30 minutes. The mixture was then kneaded by means of a vacuum kneader to prepare a cylindrical stiff plastic body (outer diameter: 50 mm, length: 300 mm) to be used for extruding. Then this body was extruded in a plunger type extruder to form a tube having an

4

outer diameter of 10.0 mm and an inner diameter of 8.6 mm at a rate of about 30 mm/sec and the extruded tube was immediately passed through an electric furnace heated at 500°C to thermoset the organic substance to obtain a tube capable of being manually handled. This tube was cut to a length of 800 mm and fired in a vertical type of gas furnace by raising the temperature to a maximum temperature of 1,680°C and maintaining said temperature for about 1 hour to obtain a thin-walled alumina tube having an outer diameter of 8.3 mm and an inner diameter of 7.2 mm. The roundness of this tube is 0.1 mm on average and the bow is 0.4 mm per 100 mm. Thus excellent dimensional precision was obtained.

The examples of the present invention given here have been of a method for producing a thin-walled translucent alumina tube, but the present invention is not limited to the production of translucent ceramic tubes but is applicable to the production of other ceramic tubes, such as those used for machine parts, optical parts, and thermal resistant and corrosion resistant parts.

To summarize the present invention provides a method which can be used to produce thin-walled ceramic tubes of high dimensional precision and with excellent efficiency.

## Claims

1. A method for producing a ceramic tube in which a plastic body suitable for extrusion is prepared, the body is extruded into a tube and the extruded tube is fired, characterized in that the plastic body consists essentially of ceramic raw material, a water-soluble thermosetting organic substance which is thermally decomposed at the firing temperature and water, and in that hardening of the extruded tube is performed by heating immediately after the extrusion.

2. A method as claimed in claim 1, wherein the thermosetting organic substance is methyl cellulose and is present in an amount in the range 2 to 6% by weight based on the ceramic raw material.

3. A method as claimed in claim 1 or claim 2 wherein the extruded tube is continuously passed through a heating furnace arranged near the extruding die of the extruder, to harden the tube.

4. A method as claimed in any one of claims 1 to 3, wherein pressurized gas is supplied into the inside of said tube during the heating and hardening of the tube.

5. A method as claimed in claim 4 wherein the pressure of said gas is in the range 20 to 98 kPa (0.2 to 1.0 kg/cm$^2$) above the pressure outside the tube.

6. A method as claimed in claim 4 or claim 5 wherein the pressurized gas is air supplied via a passage provided in the inner die by which the inner wall of the tube is formed.

7. A method as claimed in any one of the preceding claims wherein the ambient temperature around the tube after extrusion is in the range 300 to 800°C.

## Patentansprüche

1. Verfahren zur Herstellung eines keramischen Rohres, bei dem ein zum Strangpressen geeigneter plastischer Körper vorbereitet wird, der Körper zu einem Rohr stranggepreßt und das stranggepreßte Rohr gebrannt wird, dadurch gekennzeichnet, daß der plastische Körper im wesentlichen aus keramischem Rohmaterial, einer wasserlöslichen, warmaushärtenden organischen Substanz, die bei der Brenntemperatur thermisch zersetzt wird, und aus Wasser besteht, und daß das Aushärten des strangegepreßten Rohres durch Erhitzen unmittelbar nach dem Strangpressen durchgeführt wird.

2. Verfahren nach Anspruch 1, wobei die warmaushärtende organische Substanz Methylzellulose ist, die im Bereich von 2 bis 6 Gew.%, bezogen auf das keramische Rohmaterial vorhanden ist.

3. Verfahren nach Anspruch 1 oder 2, wobei das stranggepreßte Rohr kontinuierlich durch einen nahe dem Preßgesenk des Extruders angeordneten Heizofen hindurchgeleitet wird, um das Rohr auszuhärten.

4. Verfahren nach einem der Ansprüche 1 bis 3, wobei während des Erhitzens und Aushärtens des Rohres ein unter Druck stehendes Gas in das Innere des Rohres eingeleitet wird.

5. Verfahren nach Anspruch 4, wobei der Druck des Gases in dem Bereich von 20 bis 98 kPa über dem außerhalb des Rohres herrschenden Druck liegt.

6. Verfahren nach Anspruch 4 oder 5, wobei das unter Druck stehende Gas Luft ist, die über eine Bohrung zugeführt wird, die in einem die Innenwand des Rohres formenden Formgesenk angeordnet ist.

7. Verfahren nach einem der vorhergehenden Ansprüche, wobei die Umgebungstemperatur um das Rohr herum nach dem Strangpressen im Bereich von 300 bis 800°C liegt.

## Revendications

1. Procédé pour produire un tuyau céramique où un corps en plastique approprié à l'extrusion est préparé, le corps est extrudé en un tube et le tube extrudé est cuit, caractérisé en ce que le corps en plastique se compose essentiellement de matière première de céramique, d'une substance organique thermodurcissable soluble dans l'eau qui est thermiquement décomposée à la température de cuisson et d'eau, et en ce que le durcissement du tube extrudé est accompli par chauffage immédiatement après l'extrusion.

2. Procédé selon la revendication 1 où la substance organique thermodurcissable est de la méthyl cellulose et est présente en une quantité dans la gamme de 2 à 6% en poids en se basant sur la matière première céramique.

3. Procédé selon la revendication 1 ou la revendication 2 où le tube extrudé passe continuellement à travers un four chauffant agencé à proximité de la filière d'extrusion de l'extrudeuse, pour durcir le tube.

4. Procédé selon l'une quelconque des revendications 1 à 3 où du gaz sous pression est introduit dans ledit tube pendant le chauffage et le durcissement du tube.

5. Procédé selon la revendication 4 où la pression dudit gaz est dans la gamme de 20 à 98 kPa (0,2 à 1,0 kg/cm²) au-dessus de la pression en dehors du tube.

6. Procédé selon la revendication 4 ou la revendication 5 où la gaz sous pression est de l'air fourni par un passage prévu dans la filière interne par laquelle la paroi interne du tube est formée.

7. Procédé selon l'une quelconque des revendications précédentes où la température ambiante autour du tube après extrusion est dans la gamme de 300 à 800°C.

## FIG. 1